(19) Europäisches Patentamt
European Patent Office
Office européen des brevets

(11) **EP 3 901 320 A1**

(12) **EUROPEAN PATENT APPLICATION**
published in accordance with Art. 153(4) EPC

(43) Date of publication:
**27.10.2021 Bulletin 2021/43**

(51) Int Cl.:
*C23C 2/26* (2006.01)  *C23C 2/28* (2006.01)
*C23C 2/06* (2006.01)  *C23C 2/20* (2006.01)
*C22C 18/04* (2006.01)

(21) Application number: **19899332.1**

(22) Date of filing: **12.12.2019**

(86) International application number:
**PCT/KR2019/017543**

(87) International publication number:
**WO 2020/130482 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.12.2018 KR 20180165329**
**21.11.2019 KR 20190150433**

(71) Applicant: **POSCO**
**Pohang-si, Gyeongsangbuk-do 37859 (KR)**

(72) Inventors:
• **KIM, Heung-Yun**
**Gwangyang-si, Jeollanam-do 57807 (KR)**
• **HAN, Do-Kyeong**
**Incheon 21985 (KR)**
• **KIM, Myung-Soo**
**Gwangyang-si, Jeollanam-do 57807 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(54) **ZINC ALLOY-PLATED STEEL MATERIAL HAVING EXCELLENT CORROSION RESISTANCE AND SURFACE QUALITY, AND METHOD FOR PRODUCING SAME**

(57) The present invention relates to a zinc alloy-plated steel material used in automobiles, building materials, home appliances, or the like, and more specifically, to a zinc alloy-plated steel material having excellent corrosion resistance and surface quality, and a method for producing same.

【Fig. 1】

EP 3 901 320 A1

**Description**

[Technical Field]

The present disclosure relates to a zinc alloy-plated steel material used in automobiles, building materials, home appliances, and the like, and more particularly, to a zinc alloy-plated steel material having excellent corrosion resistance and surface qualities, and a method of manufacturing the same.

[Background Art]

Iron is the most widely used material in industry and has excellent physical and mechanical properties. However, iron is easily oxidized, to be vulnerable to corrosion. For this reason, as a method of preventing oxidation of iron, a method of retarding corrosion by coating a surface of a material with a metal, exhibiting higher reactivity with oxygen than iron, as a protective layer. A representative example is a zinc-plated material with a zinc or zinc-based film formed thereon.

The zinc-plated steel material may protect iron from corrosion in a sacrificial manner in which zinc, having higher oxidation potential than base steel, is dissolved first, a corrosion suppression manner in which zinc-corrosion products are densely formed to retard corrosion, and the like.

Recently, as corrosive environments have worsened, many efforts have been made to improve corrosion resistance in terms of resource and energy saving. As an example of such recent efforts, research into zinc-aluminum alloy plating having excellent corrosion resistance is also underway. However, the zinc-aluminum alloy plating is insufficient in terms of long-term durability because aluminum dissolves more easily under alkaline conditions than zinc.

Recently, corrosion resistance has been significantly improved using magnesium (Mg). In Patent Document 1, a Zn-Mg-Al alloy-plating layer includes 0.05 to 10.0 weight % (wt%) of Mg, 0.1 to 10.0 wt% of aluminum (Al), and a balance of iron (Fe) and inevitable impurities. However, when a coarse plated structure is formed or a specific structure is intensively formed, preferential corrosion may occur.

In Patent Document 2, as a result of controlling a structure of a plating layer to improve corrosion resistance, a Zn-Al-Mg-Si plating layer has a metallic structure, in which an $Mg_2Si$ phase, a $Zn_2Mg$ phase, an Al phase, a Zn phase, and the like, are mixed, of a ternary eutectic structure of $Al/Zn/Zn_2Mg$. However, Patent Document is limited to high-strength steel containing silicon (Si), costs for manufacturing a plating ingot are increased because a silicon component is necessarily contained in a plating structure, and it may be difficult to control a process. In Patent Document 3, as a technology for improving corrosion resistance by adding other elements to a Zn-Al-Mg main component, chromium (Cr) is contained in an Al-Fe-Si-based plating layer by adding Cr to a plating layer. However, addition of a chromium component may result in excessive formation of dross, and it may be disadvantageous for controlling components of a plating bath. Accordingly, there is continuous demand for a plated sheet material securing excellent corrosion resistance and protecting a surface from dross, or the like, to have excellent surface qualities.

[Related Art Documents]

(Patent Document 1)
Japanese Laid-Open Patent Publication No. 1999-158656
(Patent Document 2)
Japanese Laid-Open Patent Publication No. 2001-295018
(Patent Document 3)
Korean Laid-Open Patent Publication No. 10-2011-0088573

[Disclosure]

[Technical Problem]

An aspect of the present disclosure is to provide a zinc alloy-plated steel material securing excellent corrosion resistance by optimizing a composition and a microstructure of a plating layer and having excellent surface characteristics, and a method of manufacturing the same.

The present disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

[Technical Solution]

According to an aspect of the present disclosure, a zinc alloy-plated steel material having excellent corrosion resistance and surface qualities includes base steel and a zinc alloy-plating layer formed on the base steel. The zinc alloy-plating layer includes, by weight %, 8 to 25% of aluminum (Al), 4 to 12% of magnesium (Mg), and a balance of zinc (Zn) and inevitable impurities. An area fraction, occupied by a polygonal solidification phase observed on a surface of the zinc alloy-plating layer, is 20 to 90%.

According to another aspect of the present discourse, a method of manufacturing a zinc alloy-plated steel material having excellent corrosion resistance and surface qualities includes: preparing base steel; dipping the prepared base steel in a plating bath to be plated, the plating bath including, by weight %, 8 to 25% of aluminum (Al), 4 to 12% of magnesium (Mg), and a balance of zinc (Zn) and inevitable impurities; wiping the plated base steel; and forming a polygonal solidification phase on a surface of a hot-dip galvanized layer after the wiping.

[Advantageous Effects]

As set forth above, a Zn-Al-Mg-based zinc alloy-plated steel material having excellent corrosion resistance and surface characteristics and a method of manufacturing the same may be provided. In particular, since the Zn-Al-Mg-based zinc alloy-plated steel material has excellent corrosion resistance and surface characteristics, the steel material may be applied to novel fields to which conventional plated steel materials have not been applied.

[Description of Drawings]

FIG. 1 is an image observing a surface of a plating layer according to Inventive Example 1, among examples of the present disclosure.

FIG. 2 is an image observing a surface of a plating layer according to Comparative Example 1, among examples of the present disclosure.

[Best Mode for Invention]

Hereinafter, the present disclosure will be described in detail.

A zinc alloy-plated steel material according to the present disclosure may include base steel and a zinc alloy-plating layer formed on the base steel.

The type of the base steel is not necessarily limited, and the base steel may be any base steel applicable to technical fields to which the present disclosure pertains. For example, the base steel may be a hot-rolled steel sheet, a cold-rolled steel sheet, a wire rod, a steel wire, or the like.

The zinc alloy-plating layer is based on zinc (Zn), and includes magnesium (Mg) and aluminum (Al). The zinc alloy-plating layer may include, in detail, by weight %, 8 to 25% of aluminum, 4 to 12% of magnesium, and a balance of zinc and inevitable impurities. The zinc alloy-based layer may further include 0.0005 to 0.009% of at least one of beryllium (Be), calcium (Ca), cerium (Ce), lithium (Li), scandium (Sc), strontium (Sr), vanadium (V), and yttrium (Y). Hereinafter, a chemical composition of the zinc alloy-plated steel will be described in detail.

Aluminum (Al): 8 to 25 weight % (hereinafter, %)

Aluminum may stabilize a magnesium (Mg) component and may serve as a corrosion barrier to suppress initial corrosion in a corrosive environment. The content of aluminum may vary depending on the content of magnesium. When the content of aluminum is less than 8%, magnesium may not be stabilized while producing a molten metal in a plating bath, and thus, magnesium oxide may be formed on a surface of the molten metal to make it difficult to use aluminum. On the other hand, when the content of Al is greater 25%, a plating temperature may be increased and various devices mounted in the plating bath may be severely corroded. Therefore, a content of Al, greater than 25%, is not preferable.

Magnesium (Mg): 4 to 12%

Magnesium is a main component forming a structure exhibiting corrosion resistance. When the content of magnesium is less than 4%, exhibition of corrosion resistance is insufficient. When the content of magnesium is greater than 20%, a large amount of magnesium oxide may be formed in the plating bath. Since various issues such as deterioration in a material and an increase in costs may secondarily occur, the content of magnesium may be, in detail, 4 to 12% and, in further detail, 5% or more.

The contents of aluminum and magnesium may satisfy, in detail, Relational Expression 1.

$$[\text{Relational Expression 1}]$$

$$Mg \leq -0.0186*Al^2 + 1.0093*Al + 4.5$$

where each of Mg and Al denotes the content (weight %) of the corresponding element

In the present disclosure, the contents of aluminum and magnesium may satisfy, in detail, the condition of Relational Expression 1 to stabilize the molten metal and to significantly suppress formation of an oxide.

Other than aluminum and magnesium, beryllium (Be), calcium (Ca), cerium (Ce), lithium (Li), scandium (Sc), strontium (Sr), vanadium (V), yttrium (Y), and the like, may be additionally contained in the zinc alloy-plating layer to further stabilize the magnesium component, and may be contained in an amount of, in detail, 0.0005 to 0.009%. When each of Be, Ca, Ce, Li, Sc, Sr, V, Y, and the like, is contained in an amount less than 0.0005%, it may be difficult to obtain a substantial Mg stabilization effect. When each of Be, Ca, Ce, Li, Sc, Sr, V, Y, and the like, is contained in an amount greater than 0.0009%, solidification may occur at the end of plating to deteriorate corrosion resistance and to increase costs. Therefore, the above content is not preferable.

Other than the alloy composition, a balance of zinc (Zn) and inevitable impurities are included. The addition of effective elements, other than the alloy composition, is not excluded.

A surface of the zinc alloy-plating layer may include a polygonal solidification phase, and an area fraction occupied by the polygonal solidification phase observed on the surface may be, in detail, 20 to 90%.

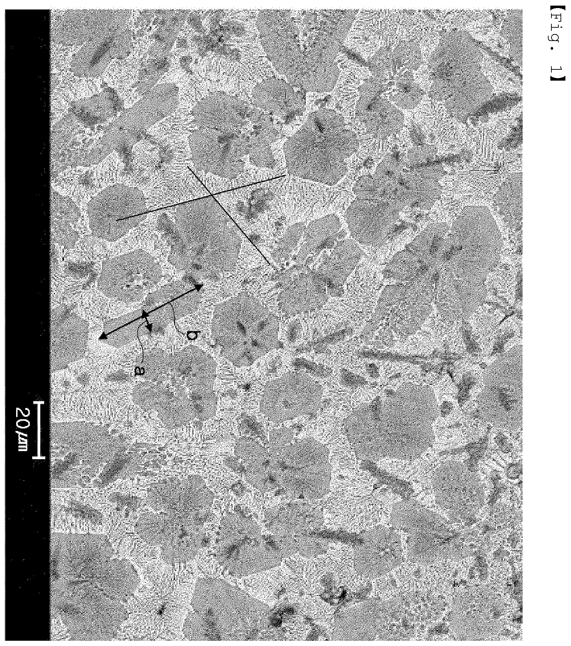

When the surface of the zinc alloy-plating layer is observed with a scanning electron microscope (SEM) or an optical microscope, structures having various shapes such as a polygonal shape, a circular shape, an elliptical shape, a sand shape, and the like, may be observed. In the present disclosure, the polygonal solidification phase is one of the structures observed on the surface, is exposed to a surface layer, and is clearly distinguished in color and shape from adjacent, other solidification structures. For example, as illustrated in FIG. 1, boundaries between the polygonal solidification phase and the adjacent, other structures are distinguished as almost straight lines, and the straight lines intersect each other to form a predetermined angle. In this case, since the angle may have various values, the angle is not limited to a specific value. In addition, the polygonal solidification phase may be formed by multiple overlaps and may have several angles, and the entire inside of a polygonal solidification structure may not have the same color or the same shape. Some structures may overlap each other, and may be deformed and appear to be different from each other. Therefore, when some structures have two or more angles, they include a polygonal solidification phase.

The polygonal solidification phase may be an alloy phase in which two or three components of Zn, Al, and Mg are detected, and thus, may be an intermetallic compound or an alloy phase in which Zn, Al, an additional element for stabilization, and the like, are included in an intermetallic compound. The intermetallic compounds may be $MgZn_2$, $Mg_2Zn_{11}$, or the like.

An area occupied by the polygonal solidification phase on the surface may be, in detail, 20 to 90% in an area fraction. When the area of the polygonal solidification phase is less than 20%, corrosion resistance and workability may be insufficient. When the area of the polygonal solidification phase is greater than 90%, corrosion resistance may be rather lowered. The area fraction of the polygonal solidification phase may be, in further detail, 30 to 70%. Since the polygonal solidification phase is observed on the surface, the area of the polygonal solidification phase is obtained as an area occupied by the polygonal solidification phase on the surface area.

A ratio (b/a) of a major axis 'b' of the polygonal solidification phase to a minor axis 'a' of the polygonal solidification phase may be, in detail, 1 to 3. As illustrated in FIG. 1, a shape of the polygonal solidification phase may be defined as the minor axis 'a' and the major axis 'b' and may be represented by the ratio 'b/a' including both cases in which some solidification phases are difficult to be separated from each other and are deformed because they overlap each other. When the ratio 'b/a' is 1 or more, formability may be excellent. However, when the ratio 'b/a' is significantly high, a solidification phase may be excessively elongated to have an adverse effect on forming. When the ratio 'b/a' is higher than 3, it may be disadvantageous for formability. Therefore, the ratio 'b/a' may be, in detail, 1 to 3.

The zinc alloy-plating layer according to the present disclosure may include various phases. For example, the various phases may include $MgZn_2$, $Mg_2Zn_{11}$, an Al solid-solution phase, a Zn solid-solution phase, an Al/Zn/Mg eutectic phase, and the like. A microstructure of the zinc alloy-plating layer may include, in detail, at least one of $MgZn_2$ and $Mg_2Zn_{11}$, among the above phases, in an area fraction of 20 to 45%. This may be, in detail, an area fraction of a surface area of the plating layer.

In the present disclosure, phases formed in the zinc alloy-plating layer may be generated in a substantially non-equilibrium state. For example, in the case of $MgZn_2$, when a ratio of Mg/Zn is calculated in atomic%, a result of the calculation should be 0.33 but has actually been 0.19 to 0.24. In addition, other components may be detected in the phases generated in the non-equilibrium state. The detected components may be determined in comprehensive consideration of component analysis, shape analysis, and the like.

When the area fraction of at least one of $MgZn_2$ and $Mg_2Zn_{11}$ is less than 20%, corrosion resistance is insufficient in the moisture environment and a salt water environment. When the area fraction of at least one of $MgZn_2$ and $Mg_2Zn_{11}$ is greater than 45%, the corrosion resistance may be increased but there is a high probability that cracking may occur, because the $MgZn_2$ ally phase and the $Mg_2Zn_{11}$ alloy phase are hard. The area fraction of at least one of $MgZn_2$ and $Mg_2Zn_{11}$ may be, in detail, 20 to 40%.

The remainder may include a Zn solid-solution phase, an Al solid-solution phase, an Al/Zn/Mg eutectic phase, a non-stoichiometric composition, and the like.

Hereinafter, an example embodiment of manufacturing a zinc alloy-plated steel according to the present disclosure will be described in detail.

The present disclosure proposes a method of forming a zinc alloy-plating layer having excellent corrosion resistance and surface appearance.

A solidification process of a plating layer may be performed through nucleation and growth. When the plating layer is cooled, solidification nuclei may be produced. The solidification nuclei may be thermodynamically produced in lowest Gibbs free energy. A difference in the Gibbs free energy may be a site more advantageous for solidification in the case of non-uniform nucleation than uniform nucleation. The larger an area of a non-uniform nucleation site, the more advantageous the nucleation, and a large number of nucleation may occur. In this case, the non-uniform nucleation site may be a site in which a liquid phase of a molten metal and a solid phase are brought into contact with each other. A representative non-uniform nucleation site may be a surface of a steel sheet. Another non-uniform nucleation site may be a site the liquid phase of the molten metal and air are in contact with each other, and may be a surface of the molten metal. Accordingly, the present inventors have developed a method for controlling solidification of a steel material taken out of the plating bath to form a polygonal solidification phase on a surface of a plating layer.

A method of manufacturing a zinc alloy-plated steel material according to the present disclosure may include preparing base steel, dipping the prepared base steel in a plating bath and then wiping the dipped base steel to adjust a thickness of a plating layer, and forming a polygonal solidification phase on a surface of a hot-dip galvanized layer. Hereinafter, each process will be described in detail.

First, base steel may be prepared. As described above, the type of the base steel is not necessarily limited, and the base steel may be any base steel applicable to technical fields to which the present disclosure pertains. Before the base steel is dipped in the plating bath, the method may include removing oxides and impurities present on a surface of the base steel, performing a heat treatment process for reduction, and the like.

The base steel may be dipped in the plating bath to form a zinc alloy-plating layer on the surface of the base steel. A composition of the plating bath may include, in detail, by weight %, 8 to 25% of aluminum (Al), 4 to 12% of magnesium (Mg), and a balance of zinc (Zn) and inevitable impurities. The plating bath may further include 0.0005 to 0.009% of at least one of beryllium (Be), calcium (Ca), cerium (Ce), lithium (Li), scandium (Sc), strontium (Sr), vanadium (V), and yttrium (Y). In addition, the contents of aluminum and magnesium may satisfy Relational Expression 1. An alloy composition range of the plating bath is not different from the above-described alloy composition range of the zinc alloy-plating layer.

$$[\text{Relational Expression 1}]$$

$$Mg \leq -0.0186*Al^2 + 1.0093*Al + 4.5$$

A temperature of the plating bath may vary depending on a melting point, and the melting point may be a physicochemical property depending on the composition of the plating bath. The temperature of the plating bath may be determined by various factors such as convenience in process, heating costs, and plating quality. When these are taken into consideration, the temperature of the plating bath may be higher than the melting point and may be, in detail, 20 to 100°C higher than the melting point.

The temperature of the base steel, dipped in the plating bath, may be set in consideration of the convenience in process and heat balance. The temperature of the base steel may be set to, in detail, -10°C to +10°C of the temperature of the plating bath.

The zinc alloy-plated steel material, taken out of the plating bath, may be subjected to a wiping process in which a thickness of a plating layer is adjusted by a wiping nozzle, a so-called air knife, above the plating bath. The wiping nozzle may adjust the thickness of the plating layer by spraying air or inert gas.

After the wiping process, a polygonal solidification phase may be formed on a surface of the plating layer. To this end, a gas containing nitrogen having a concentration of 78 to 99% in a volume fraction may be primarily sprayed (primary gas spraying), and then a gas having a dew point of -5 to 50°C may be secondarily sprayed (secondary gas spray).

In the primary gas spraying, gases other than nitrogen are not limited, but may include air, oxygen or nitrogen, or an inert gas such as argon and a mixed gas thereof. In the secondary gas spraying, the dew point may be a specific value defining the amount of water contained in the gas. In this case, the type of gas is not limited during the secondary gas spraying. As an example, a gas containing nitrogen having a concentration of 89 to 99% may be used.

In the primary gas spraying, when the concentration of nitrogen is less than 78%, surface defects are likely to occur. In the primary gas spraying, when the concentration of nitrogen is greater than 99%, formation of a polygonal solidification phase is insufficient. In the secondary gas spraying, when the dew point rises, formation of polygonal solidification nuclei is increased. When the dew point is less than -5°C, the formation of polygonal solidification nuclei may be insufficient. On the other hand, when the dew point is greater than 50°C, a large amount of surface defects may occur.

In addition, after the second gas spraying, vibrations of 100 Hz to 5 MHz may be added to establish an environment advantageous for the formation of a polygonal solidification phase. When the vibrations are less than 100 Hz, the formation of the polygonal solidification phase may be insufficient. On the other hand, when the vibrations are greater than 5 MHz, surface defects may occur.

[Mode for Invention]

Hereinafter, embodiments of the present disclosure will be described more specifically through examples. However, the examples are for clearly explaining the embodiments of the present disclosure and are not intended to limit the scope of the present invention.

(Example)

A plated steel sheet was manufactured by preparing a cold-rolled steel sheet, as base steel, having a thickness of 0.8 mm and including 0.03 weight % of carbon (C), 0.2 weight % of silicon (Si), 0.15 weight % of manganese (Mn), 0.01 weight % of phosphorus (P), and 0.01 weight % of sulfur (S) (a balance of iron (Fe) and inevitable impurities), performing a degreasing process to remove impurities, such as oil or the like, smeared on a surface of the cold-rolled steel sheet, heat-treating the cold-rolled steel sheet at a temperature of 800°C in a reducing atmosphere of 10 volume % hydrogen and 90 volume % of nitrogen, and dipping the heat-treated steel sheet in a hot-dip galvanizing bath to have a composition of a plating layer listed in Table 1. In this case, a temperature of the hot-dip galvanizing bath was set to be 493°C and a temperature of the steel sheet introduced into the hot-dip galvanizing bath was also set to be 493°C. After the dipping, a thickness of the plating layer was adjusted to about 8 to 10 $\mu$m through air wiping. Then, primary and secondary gas treatments illustrated in Table 1 were performed to manufacture a plated steel sheet.

In the manufactured zinc alloy-plated steel, a phase was identified through energy dispersive X-ray spectrometer (EDS) analysis, and fractions of $MgZn_2$ and $Mg_2Zn_{11}$ phases were measured through X-ray diffraction (XRD) analysis. An area ratio of a polygonal solidification phase was measured using an image analyzer, and a ratio (b/a) of a major axis 'b' to a minor axis 'a' was calculated by measuring lengths thereof.

Surface qualities and corrosion resistance of the zinc alloy-plated steel sheet were evaluated, and results of the evaluation are listed in Table 1.

The corrosion resistance was evaluated by performing a salt spray test, measuring red rust occurrence time, and being compared with corrosion resistance of a comparative sample. In this case, the comparative sample was a zinc alloy-plated steel material having a plating layer composition including 94 weight % of zinc (Zn), 3 weight % of aluminum (Al) and 3 weight % of magnesium (Mg), and the salt spray test was performed at salinity of 5%, temperature of 35°C, pH of 6.8, and salt spray amount of 2ml/80cm$^2$·1Hr.

When the red rust occurrence time was 1.5 times or more as compared with the red rust occurrence time of the comparative sample, the corrosion resistance was evaluated to be good (o). In the case in which the red rust occurrence time was less than 1.5 times, as compared with the red rust occurrence time of the comparative sample, the corrosion resistance was evaluated to be poor (x).

Surface qualities were evaluated by observing an exterior of each manufactured sample to determine whether a surface defect such as dross, and the like, occurred. The result is as follows:

Good (o): No defect, such as dross or a spot, occurred on the surface
Poor(x): A defect, such as dross or a spot, occurred on the surface

Table 1

| | CPL (wt%) | | | PGT (NC, %) | SGT (DP, °C) | PSP | | MgZn$_2$ and Mg$_2$Zn$_{11}$ | SQ | SCR |
|---|---|---|---|---|---|---|---|---|---|---|
| | A1 | Mg | Others | | | AR (%) | mA (b) /MA (a) | AR (%) | | |
| IE 1 | 12 | 6 | - | 85 | 20 | 72 | 1.6 | 34 | o | o |
| IE 2 | 16 | 9 | - | 85 | 20 | 80 | 1.4 | 38 | o | o |
| IE 3 | 8 | 5 | - | 85 | 20 | 20 | 2.2 | 20 | o | o |
| IE 4 | 25 | 12 | - | 85 | 20 | 88 | 1.2 | *50* | o | o |
| CE 1 | 3 | 3 | - | 85 | 20 | 2 | 1.4 | 0 | o | x |
| CE 2 | 30 | 22 | - | 85 | 20 | 94 | 2.6 | 62 | x | x |
| IE 5 | 12 | 6 | Be 0.0005 | 85 | 20 | 62 | 1.4 | 35 | o | o |
| IE 6 | 12 | 6 | Be 0.0090 | 85 | 20 | 53 | 1.2 | 38 | o | o |
| CE 3 | 12 | 6 | Be 0.0500 | 85 | 20 | 65 | 1.6 | 39 | x | x |
| IE 7 | 12 | 6 | Ca 0.0090 | 85 | 20 | 71 | 1.5 | 33 | o | o |
| IE 8 | 12 | 6 | Ce 0.0090 | 85 | 20 | 64 | 1.8 | 34 | o | o |
| IE 9 | 12 | 6 | Li 0.0090 | 85 | 20 | 70 | 1.8 | 36 | o | o |
| IE 10 | 12 | 6 | Sc 0.0090 | 85 | 20 | 58 | 1.4 | 35 | o | o |
| IE 11 | 12 | 6 | Sr 0.0090 | 85 | 20 | 66 | 1.6 | 32 | o | o |
| IE 12 | 12 | 6 | V 0.0090 | 85 | 20 | 71 | 1.3 | 34 | o | o |
| IE 13 | 12 | 6 | Y 0.0090 | 85 | 20 | 62 | 1.1 | 36 | o | o |
| IE 14 | 12 | 6 | - | 78 | -5 | 27 | 1.2 | 20 | o | o |
| IE 15 | 12 | 6 | - | 99 | 50 | 90 | 2.2 | 43 | o | o |
| CE 4 | 12 | 6 | - | 70 | -10 | 12 | 1.4 | 10 | o | x |
| CE 5 | 12 | 6 | - | 100 | 60 | 77 | 3.5 | 40 | x | o |
| IE16 | 10 | 4 | - | 85 | 20 | 20 | 1.9 | 20 | o | o |

IE: Inventive Example
CE: Comparative Example
CPL: Composition of Plating Layer
PGT: Primary Gas Treatment / NC: Nitrogen Concentration
SGT: Secondary Gas Treatment / DP: Dew Point
PSP: Polygonal Solidification Phase
AR: Area Ratio
mA: Minor Axis / MA: Major Axis
SQ: Surface qualities
SCR: Surface Corrosion Resistance

As can be seen from Table 1, all inventive examples satisfying conditions according to the present disclosure had excellent surface qualities and corrosion resistance.

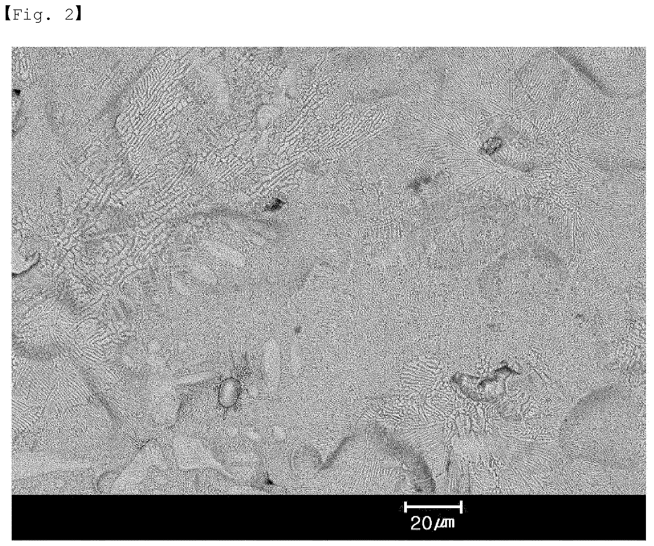

In particular, FIG. 1 is an image observing a surface of Inventive Example 1. From FIG. 1, it can be seen that a polygonal solidification phase, in which straight lines intersect each other to form a predetermined angle, is formed in an appropriate fraction. FIG. 2 is an image observing a surface of Comparative Example 1. As compared with FIG. 1, it can be seen that it is difficult to observe a polygonal solidification phase on the surface.

Comparative Examples 1 and 2 are the cases in which the contents of aluminum (Al) and magnesium (Mg), essential components of a proposed plating layer, were outside the range proposed in the present disclosure. In Comparative Example 1, contents of Al and Mg of a plating layer were significantly low and a polygonal solidification phase observed on a surface is insufficient, so that corrosion resistance was not secured. In Comparative Example 2, contents of Al and Mg were excessive and too many polygonal solidification phases were formed on a surface, so that both the surface qualities and corrosion resistance were poor.

Comparative Example 3 is the case in which beryllium (Be) added for a supplementary effect was excessively included in a plating layer, and surface qualities and corrosion resistance were poor. Comparative Examples 4 and 5 did not satisfy the gas spray conditions proposed by the present disclosure, so that surface corrosion resistance or surface characteristics of the plating layer were poor.

**Claims**

1. A zinc alloy-plated steel material having excellent corrosion resistance and surface qualities, the zinc alloy-plated steel material comprising:

   base steel and a zinc alloy-plating layer formed on the base steel,
   wherein the zinc alloy-plating layer includes, by weight %, 8 to 25% of aluminum (Al), 4 to 12% of magnesium (Mg), and a balance of zinc (Zn) and inevitable impurities, and
   an area fraction, occupied by a polygonal solidification phase observed on a surface of the zinc alloy-plating layer, is 20 to 90%.

2. The zinc alloy-plated steel material of claim 1, wherein a ratio (b/a) of a major axis 'b' to a minor axis 'a' of the polygonal solidification phase is 1 to 3.

3. The zinc alloy-plated steel material of claim 1, wherein a microstructure of the zinc alloy-plating layer includes at least one of $MgZn_2$ and $Mg_2Zn_{11}$ in an area fraction of 20 to 45%.

4. The zinc alloy-plated steel material of claim 1, wherein Al and Mg satisfy the following relational expression 1,

   [Relational Expression 1]

   $$Mg \leq -0.0186*Al^2 + 1.0093*Al + 4.5$$

   where each of Mg and Al denotes a content (weight %) of a corresponding element.

5. The zinc alloy-plated steel material of claim 1, wherein the zinc alloy-based layer further includes, by weight %, 0.0005 to 0.009% of at least one of beryllium (Be), calcium (Ca), cerium (Ce), lithium (Li), scandium (Sc), strontium (Sr), vanadium (V), and yttrium (Y).

6. A method of manufacturing a zinc alloy-plated steel material having excellent corrosion resistance and surface qualities, the method comprising:

   preparing base steel;
   dipping the prepared base steel in a plating bath to be plated, the plating bath including, by weight %, 8 to 25% of aluminum (Al), 4 to 12% of magnesium (Mg), and a balance of zinc (Zn) and inevitable impurities;
   wiping the plated base steel; and
   forming a polygonal solidification phase on a surface of a hot-dip galvanized layer after the wiping.

7. The method of claim 6, wherein the forming of the polygonal solidification phase includes spraying a gas, containing nitrogen having a concentration of 78 to 99% in a volume fraction, primary gas spraying, and then spraying a gas having a dew point of -5 to 50°C, secondary gas spraying.

8. The method of claim 7, further comprising:
   adding vibrations of 100 Hz to 5 MHz after the secondary gas spraying.

9. The method of claim 6, wherein Al and Mg satisfy the following relational expression 1,

$$[\text{Relational Expression 1}]$$

$$Mg \leq -0.0186*Al^2 + 1.0093*Al + 4.5$$

where each of Mg and Al denotes a content (weight %) of a corresponding element.

10. The method of claim 6, wherein the plating bath further includes, by weight %, 0.0005 to 0.009% of at least one of beryllium (Be), calcium (Ca), cerium (Ce), lithium (Li), scandium (Sc), strontium (Sr), vanadium (V), and yttrium (Y) .

【Fig. 1】

【Fig. 2】

## INTERNATIONAL SEARCH REPORT

| | International application No. |
|---|---|
| | **PCT/KR2019/017543** |

**A. CLASSIFICATION OF SUBJECT MATTER**

*C23C 2/26(2006.01)i, C23C 2/28(2006.01)i, C23C 2/06(2006.01)i, C23C 2/20(2006.01)i, C22C 18/04(2006.01)i*

According to International Patent Classification (IPC) or to both national classification and IPC

**B. FIELDS SEARCHED**

Minimum documentation searched (classification system followed by classification symbols)
C23C 2/26; C22C 18/00; C23C 2/06; C23C 2/12; C23C 2/40; C23C 2/28; C23C 2/20; C22C 18/04

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: polygonal solidification phase, wear resistance, wiping, cooling

**C. DOCUMENTS CONSIDERED TO BE RELEVANT**

| Category* | Citation of document, with indication, where appropriate, of the relevant passages | Relevant to claim No. |
|---|---|---|
| X | KR 10-2014-0074231 A (DONGBU STEEL CO., LTD.) 17 June 2014 See paragraphs [0061]-[0062] and claims 1, 4. | 6,9 |
| Y | | 1-5,7-8,10 |
| Y | KR 10-2016-0071918 A (DONGBU STEEL CO., LTD.) 22 June 2016 See paragraphs [0045], [0049] and claim 3. | 1-5,10 |
| Y | KR 10-2018-0073412 A (POSCO) 02 July 2018 See paragraphs [0042]-[0045] and claims 5, 10-11. | 7-8 |
| Y | JP 2003-147500 A (NIPPON STEEL CORP.) 21 May 2003 See paragraph [0031] and claims 3-4. | 8 |
| A | JP 2001-329355 A (NIPPON STEEL CORP.) 27 November 2001 See paragraph [0019] and claim 1. | 1-10 |

| ☐ Further documents are listed in the continuation of Box C. | ☒ See patent family annex. |
|---|---|

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 MARCH 2020 (23.03.2020) | **24 MARCH 2020 (24.03.2020)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

**INTERNATIONAL SEARCH REPORT**
Information on patent family members

International application No.

**PCT/KR2019/017543**

| Patent document cited in search report | Publication date | Patent family member | Publication date |
|---|---|---|---|
| KR 10-2014-0074231 A | 17/06/2014 | None | |
| KR 10-2016-0071918 A | 22/06/2016 | KR 10-1692118 B1 | 17/01/2017 |
| | | WO 2016-093667 A1 | 16/06/2016 |
| KR 10-2018-0073412 A | 02/07/2018 | CN 110100037 A | 06/08/2019 |
| | | EP 3561137 A1 | 30/10/2019 |
| | | JP 2020-504237 A | 06/02/2020 |
| | | KR 10-1879093 B1 | 16/07/2018 |
| | | WO 2018-117732 A1 | 28/06/2018 |
| JP 2003-147500 A | 21/05/2003 | JP 3732141 B2 | 05/01/2006 |
| JP 2001-329355 A | 27/11/2001 | JP 4555492 B2 | 29/09/2010 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11158656 A
- JP 2001295018 A
- KR 1020110088573